# EUROPÄISCHE PATENTSCHRIFT

(11) **EP 2 923 835 B1**
(45) Veröffentlichungstag und Bekanntmachung des Hinweises auf die Patenterteilung: **06.06.2018**
(21) Anmeldenummer: 14162287.8
(22) Anmeldetag: 28.03.2014
(51) Int. Cl.: B32B 37/04, B32B 37/12

(54) **Verfahren zur Herstellung einer thermoplastischen Schaumstoffplatte durch symmetrisches Verbinden der Ausgangsplatten**
Method for the preparation of a thermoplastic foam panel by symmetrical connecting the initial panels
Procédé de production d'une plaque de mousse thermoplastique par liaison symétrique des plaques

(43) Veröffentlichungstag der Anmeldung: 30.09.2015
(73) Patentinhaber: BASF SE, 67056 Ludwigshafen am Rhein (DE)
(72) Erfinder: Scherzer, Dietrich, 67433 Neustadt (DE); Hahn, Klaus, 67281 Kirchheim (DE); Hahn, Christoph, 67435 Neustadt (DE); Diehlmann, Tim, 67283 Obrigheim-Colgenstein (DE); Merkel, Peter, 67308 Zellertal (DE); Dietzen, Franz-Josef, 67454 Hassloch (DE); Sandner, Carsten, 67098 Bad Dürkheim (DE); Schröder, Cathrin, 34212 Melsungen (DE); Sommer, Maria-Kristin, 67157 Wachenheim (DE)
(74) Vertreter: BASF IP Association

(56) Entgegenhaltungen:
- EP-A2- 0 231 013
- DE-A1- 10 251 506
- FR-A1- 2 950 288
- US-A1- 2012 009 377

## Beschreibung

Die vorliegende Erfindung betrifft ein Verfahren zur Herstellung von zumindest zweilagigen thermoplastischen Schaumstoffplatten durch symmetrisches Verbinden von mindestens zwei dünneren thermoplastischen Schaumstoffplatten zu der zumindest zweilagigen thermoplastischen Schaumstoffplatte. Bei den thermoplastischen Schaumstoffplatten der vorliegenden Erfindung bzw. deren dünneren thermoplastischen Ausgangsplatten handelt es sich vorzugsweise um thermoplastische Extrusionsschaumstoffplatten. Das symmetrische Verbinden erfolgt vorzugsweise durch (symmetrisches) thermisches Verschweißen. Weiterhin betrifft die vorliegende Erfindung die thermoplastischen Schaumstoffplatten als solche, die zumindest zweilagig sind. Die Anzahl der Lagen der thermoplastischen Schaumstoffplatte als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatte als solche erhalten, im Fall von vier dünneren thermoplastischen Schaumstoffplatten ergibt sich demzufolge eine vierlagige thermoplastische Schaumstoffplatte als solche.

Ein häufig auftretendes Problem bei thermoplastischen Schaumstoffplatten, insbesondere bei thermoplastischen Extrusionsschaumstoffplatten, ist deren Anfälligkeit für eine nachträgliche Verformung infolge von Temperaturänderungen. Diese Verformungen werden auch als "Aufschüsseln" oder "thermisch induzierter Verzug" bezeichnet. Ursache für den thermisch induzierten Verzug von thermoplastischen (Extrusions-)Schaumstoffplatten sind Inhomogenitäten in der Plattenstruktur, die zu unterschiedlichen Spannungen auf den jeweiligen Plattenseiten bei Temperaturänderungen, insbesondere beim Erwärmen, führen. Aufgrund dieser Temperaturänderungen wird, insbesondere beim Erwärmen, ein Verziehen bzw. Verformen der thermoplastischen (Extrusions-)Schaumstoffplatte festgestellt.

So tritt beispielsweise bei einer kontinuierlichen Extrusion der extrudierte thermoplastische Schaumstoff aus dem Extruder durch die Extrusionsdüse aus und wird in der Regel mit Hilfe eines Kalibrierwerkzeuges in Form gebracht bzw. bearbeitet. Beispielsweise aufgrund der Einwirkung der Schwerkraft beim Austritt des thermoplastischen Schaumstoffs aus der Extrusionsdüse entstehen bei der kontinuierlichen Extrusion in den dabei erzeugten thermoplastischen Extrusionsschaumstoffplatten Bereiche von unterschiedlicher Dichte und somit Inhomogenitäten in der Plattenstruktur. Diese Bereiche von unterschiedlicher Dichte oder "eingefrorenen Spannungen" sind letztendlich für den thermisch induzierten Verzug bei Temperaturänderungen verantwortlich. Ausgelöst werden diese Dichteunterschiede beispielsweise durch unterschiedliche Schaumstruktur infolge der Schwerkraft an den Außenseiten der Platten, durch unterschiedliche Abkühlgeschwindigkeiten der Plattenaußenseiten oder durch verschiedene Ausrichtungen der extrudierten Polymere an den Plattenaußenseiten. Durch eine Temperaturänderung kommt es zum Verzug (der Form) der thermoplastischen Extrusionsschaumstoffplatten, sofern diese Dichteunterschiede aufgrund beispielsweise einen der oben genannten Auslösungsfaktoren aufweisen. Bereiche mit einer hohen Dichte weisen eine hohe thermisch induzierte Spannung auf und verformen sich bei Temperaturerhöhung entsprechend stärker als Bereiche mit einer niedrigeren Dichte, die für eine geringere thermisch induzierte Spannung stehen.

Die Herstellung von thermoplastischen Extrusionsschaumstoffplatten durch kontinuierliche Extrusion von thermoplastischen Polymeren ist bereits seit längerem bekannt. Die grundlegenden Verfahrensschritte für die Herstellung von beispielsweise einem extrudierten Polystyrol-Schaumstoff (XPS) werden unter anderem in "Polystyrol, Kunststoffhandbuch 4" [H. Gausepohl u. R. Geliert, Hanser-Verlag München (1996] unter Kapitel 13.2.3 (S. 591-598) offenbart. Um Produkte (wie thermoplastische Extrusionsschaumstoffplatten oder Folien) mit gleichmäßigen Eigenschaften zu erhalten, wird eine Homogenisierung der Schmelze beispielsweise durch den Einsatz von statischen oder dynamischen Mischern vor der Düse, also im Extruder, durchgeführt. Das Aufschüsseln der thermoplastischen Extrusionsschaumstoffplatten infolge von Wärmeeinwirkung kann durch diese Maßnahmen jedoch nicht unterbunden werden.

EP-A 2 420 531 offenbart Extrusionsschaumstoffe auf Basis eines Polymers wie Polystyrol, indem mindestens ein mineralischer Füllstoff mit einer Partikelgröße ≤ 10 µm und mindestens ein Keimbildner enthalten sind. Diese Extrusionsschaumstoffe können auch in Form von Schaumstoffplatten vorliegen. Aufgrund der gleichzeitigen Zugabe des mineralischen Füllstoffs mit einer speziellen Partikelgröße und mindestens eines Keimbildners auf Basis eines Wachses oder eines Oligomeren weisen die Extrusionsschaumstoffe gemäß EP-A 2 420 531 eine verbesserte Steifigkeit auf. Das Problem des Aufschüsselns von thermoplastischen Schaumstoffplatten durch Wärmeeinwirkung, also des thermisch induzierten Verzuges, wird in EP-A 2 420 531 jedoch nicht umrissen.

EP-A 0 543 242 betrifft ein Verfahren zur Herstellung von Schaumstoffplatten mit hoher Druckfestigkeit durch Extrusion eines Gemisches aus einem Styrolpolymerisat und einem Treibmittel. EP-A 0 427 533 offenbart dimensionsstabile alkenylaromatische Polymerschäume, die ebenfalls durch Extrusion hergestellt werden. In beiden Dokumenten werden die entsprechend hergestellten einlagigen Extrusionsschaumstoffplatten in den jeweiligen Ausführungsbeispielen einer Untersuchung hinsichtlich deren Dimensionsstabilität nach unterschiedlichen Messmethoden unterzogen. In keinem dieser Dokumente werden jedoch mehrlagige, also zumindest zweilagige thermoplastische Schaumstoffplatten offenbart bzw. Untersuchungen zu deren Dimensionsstabilität durchgeführt.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150 °C aufweisen, beispielsweise Aceton oder Gemische von organischen Lösungsmitteln mit Wasser.

Extrudierte Kunststoffschaumplatten von großer Dicke werden in DE-A 101 063 41 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweise Verschweißung oder stellenweise Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 41 sind jedoch keine Angaben enthalten, wie anstelle einer Verklebung die Verschweißung der Ausgangsplatten konkret durchgeführt werden kann.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

FR 2 950 288 betrifft ein Kompositmaterial, das aufgebaut ist aus einer Kunststoffplatte, die auf einen Schaumstoff kalandriert und laminiert wird. Es ist möglich, auch auf beide Seiten der Kunststoffplatte einen Schaumstoff aufzubringen. Ein direktes Verbinden zweier Schaumstoffplatten wird allerdings nicht beschrieben.

US 2012/009377 beschreibt Fußbodenbeläge, die aus einem Trägermaterial und einer Deckschicht bestehen, welche durch eine Klebeschicht miteinander verbunden werden. Sowohl Trägerschicht als auch Deckschicht können einen Schaumstoff umfassen.

Die der vorliegenden Erfindung zugrunde liegende Aufgabe besteht in der Bereitstellung von zumindest zweilagigen thermoplastischen Schaumstoffplatten, die eine höhere thermische Stabilität aufweisen.

Gelöst wird die Aufgabe durch ein Verfahren zur Herstellung einer zumindest zweilagigen thermoplastischen Schaumstoffplatte durch symmetrisches Verbinden von mindestens zwei dünneren thermoplastischen Schaumstoffplatten zu der zumindest zweilagigen thermoplastischen Schaumstoffplatte, wobei das symmetrische Verbinden durch symmetrisches Verkleben und/oder durch symmetrisches thermisches Verschweißen erfolgt, wobei beim symmetrischen Verbinden bei mindestens einem zu verbindenden Plattenpaar entweder zwei Oberseiten oder zwei Unterseiten der jeweiligen dünneren thermoplastischen Schaumstoffplatten miteinander verbunden werden.

Die erfindungsgemäßen zumindest zweilagigen thermoplastischen Schaumstoffplatten zeichnen sich dadurch aus, dass sie kein Aufschüsseln oder nur ein Aufschüsseln in einem reduziertem Maße infolge von Wärmeeinwirkung zeigen. In anderen Worten ausgedrückt bedeutet dies, dass die erfindungsgemäßen zumindest zweilagigen thermoplastischen Schaumstoffplatten vorzugsweise keinen oder nur einen reduzierten thermisch induzierten Verzug aufweisen. Weiterhin sind die erfindungsgemäßen zumindest zweilagigen thermoplastischen Schaumstoffplatten auch lagerstabil.

Die mit dem erfindungsgemäßen Verfahren durch symmetrisches Verbinden hergestellten zumindest zweilagigen thermoplastischen Schaumstoffplatten zeichnen sich auch dadurch aus, dass die bei konventionellen Herstellungsverfahren der Ausgangsplatten, beispielsweise bei einem kontinuierlichen Extrusionsverfahren, entstehenden Inhomogenitäten innerhalb der einzelnen Plattenbereiche aufgrund des symmetrischen Verbindens der Ausgangsplatten unterdrückt bzw. minimiert werden. Die Inhomogenitäten in den Ausgangsplatten entstehen insbesondere durch Asymmetrie, Temperaturunterschiede oder aufgrund der Schwerkraft beim Austritt der thermoplastischen Schaumstoffausgangsplatten während des Extrusionsschrittes aus der Extrusionsdüse. Durch das erfindungsgemäße Verfahren des symmetrischen Verbindens der Ausgangsplatten werden solche Spannungen, die bei konventionell durchgeführten kontinuierlichen Extrusionsverfahren in den jeweiligen Ausgangsplatten eingefroren sind, beseitigt. Folglich zeigen die mit den erfindungsgemäßen Verfahren hergestellten zumindest zweilagigen thermoplastischen Schaumstoffplatten bei einer Wärmebehandlung keinen oder nur einen deutlich reduzierten thermisch induzierten Verzug, wobei die maximale Verformung ≤ 1,5 mm (bezogen auf die jeweilige Dicke der thermoplastischen Schaumstoffplatte (in z-Richtung) ist.

Unter dem Begriff "symmetrisches Verbinden" wird im Rahmen der vorliegenden Erfindung Folgendes verstanden: Beim symmetrischen Verbinden werden jeweils zwei dünnere thermoplastische Schaumstoffplatten (Ausgangsplatten) miteinander verbunden, die prinzipiell auf die gleiche Weise (also gleiches Verfahren und/oder Vorrichtung) hergestellt worden sind. Dabei werden die jeweils gleichen Plattenseiten der Ausgangsplatten miteinander zur Deckung gebracht. Dies bedeutet, dass beispielsweise zwei Oberseiten oder zwei Unterseiten der jeweiligen Ausgangsplatten miteinander verbunden werden, wodurch die Symmetrie erzielt wird ("Orientierung der Ausgangsplatten"). Auf diese Weise kommen auch Plattenbereiche von jeweils höherer Dichte oder Plattenbereiche von jeweils niedriger Dichte miteinander zur Deckung. Die einzelnen Ausgangsplatten können sich gegebenenfalls aber hinsichtlich der konkreten chemischen Zusammensetzung und/oder der konkreten Dimensionierung (beispielsweise hinsichtlich ihrer Dicke (z-Richtung)) unterscheiden. Vorzugsweise weisen die beiden Ausgangsplatten eines Plattenpaares jedoch Identität hinsichtlich der chemischen Zusammensetzung und/oder der Dimensionierung auf.

Sofern im erfindungsgemäßen Verfahren drei- oder noch höherlagige thermoplastische Schaumstoffplatten hergestellt werden, ist zumindest ein Plattenpaar (also ein zweilagiger Bereich) durch symmetrisches Verbinden von mindestens zwei Ausgangsplatten hergestellt worden. Vorzugsweise sind bei drei- oder höherlagigen thermoplastischen Schaumstoffplatten sämtliche Ausgangsplatten durch symmetrisches Verbinden hergestellt.

Das symmetrische Verbinden unterscheidet sich von konventionellem Verbinden also insbesondere darin, dass beim symmetrischen Verbinden die Orientierung der Ausgangsplatten zu beachten ist. Das Verbinden als solches wird erfindungsgemäß als Verkleben oder thermisches Verschweißen durchgeführt.

Nachfolgend werden die erfindungsgenmäßen zumindest zweilagigen thermoplastischen Schaumstoffplatten als solche sowie das erfindungsgemäße Herstellungsverfahren dieser Schaumstoffplatten durch symmetrisches Verbinden näher definiert.

Die erfindungsgemäße thermoplastische Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander symmetrisch verbunden werden. Die dünnen thermoplastischen Schaumstoffplatten werden auch als Ausgangsplatten bezeichnet. Im Falle einer zweilagigen thermoplastischen Schaumstoffplatte als solche werden also zwei dünnere thermoplastische Schaumstoffplatten miteinander symmetrisch verbunden. Bei einer drei- oder vierlagigen thermoplastischen Schaumstoffplatten als solcher werden somit drei bzw. vier dünnere thermoplastische Schaumstoffplatten miteinander vorzugsweise symmetrisch verbunden. Sofern noch höher lagige thermoplastische Schaumstoffplatten als solche hergestellt werden soll, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastischen Schaumstoffplatten, miteinander vorzugsweise symmetrisch verbunden werden. Vorzugsweise ist die erfindungsgemäße thermoplastische Schaumstoffplatte zweilagig oder dreilagig, insbesondere ist die erfindungsgemäße thermoplastische Schaumstoffplatte zweilagig.

Im Fall von drei- oder höherlagigen thermoplastischen Schaumstoffplatten erfolgt der Aufbau der einzelnen Lagen vorzugsweise schrittweise. Bei einer dreilagigen thermoplastischen Schaumstoffplatte wird somit vorzugsweise das Produkt des ersten Schrittes (also die zweilagige thermoplastische Schaumstoffplatte) als erste dünnere Ausgangsplatte eingesetzt und mit einer weiteren dünneren Ausgangsplatte verbunden, wobei diese weitere (zweite) dünnere Ausgangsplatte gleich oder verschieden (insbesondere hinsichtlich ihrer Dicke) gegenüber der ersten dünneren Ausgangsplatte des zweiten Schrittes sein kann.

Die zum symmetrischen Verbinden, vorzugsweise zum symmetrischen thermischen Verschweißen verwendeten dünneren thermoplastischen Schaumstoffplatten entsprechen hinsichtlich ihrer chemischer Zusammensetzung den im Rahmen des erfindungsgemäße Verfahrens hergestellten zumindest zweilagigen thermoplastischen Schaumstoffplatten als solchen (ohne Berücksichtigung der beispielsweise im Rahmen des Verschweißungsvorganges optional auf die Oberflächen aufgebrachten Komponenten wie Absorber von elektromagnetischer Strahlung oder Bindemittel bzw. ohne Berücksichtigung der infolge der Ausbildung der Schweißnaht an den entsprechenden Oberflächen auftretenden chemischen Veränderungen/Reaktionen oder im Falle eines Verklebens ohne Berücksichtigung der verwendeten Klebstoffe).

Die jeweils symmetrisch miteinander zu verbindenden dünneren thermoplastischen Schaumstoffplatten weisen vorzugsweise dieselbe Dimensionen und/oder dieselbe chemische Zusammensetzung auf. Gegebenenfalls können aber auch thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander symmetrisch verbunden, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der symmetrisch miteinander zu verbindenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 150 mm auf. Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten (Ausgangsplatten). Allerdings können jedoch beispielsweise im Falle des thermischen Verschweißens die jeweils miteinander zu verschweißenden Oberflächen der Ausgangsplatten zumindest etwas auf- oder angeschmolzen (Aufschmelzschritt), was in Abhängigkeit der zugeführten Wärmemenge zu einer gewissen Reduzierung der Dicke der jeweiligen Ausgangsplatte führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit großer Wärmezufuhr durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Die zum symmetrischen Verbinden eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart. Beispielsweise können Platten aus amorphen, kristallinen oder teilkristallinen thermoplastischen Schaumstoffen eingesetzt werden.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte < 200 g/l aufweisen, bevorzugt eine Dichte von < 100 g/l. Ein bevorzugter Partikelschaumstoff ist Styropor®, das kommerziell von der BASF SE erhältlich ist. Mehr bevorzugt sind die dünneren thermoplastischen Schaumstoffplatten ein Extrusionsschaumstoff. Der Extrusionsschaumstoff ist vorzugsweise ein Polystyrol oder aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Wie vorstehend bereits ausgeführt, unterscheidet sich das beim erfindungsgemäßen Verfahren eingesetzte symmetrische Verbinden der Ausgangsplatten von konventionellen Bindungstechniken dahingehend, dass im erfindungsgemäßen Verfahren die Positionierung (Symmetrie) der Ausgangsplatten relativ zueinander zu beachten ist. Erfindungsgemäß erfolgt im erfindungsgemäßen Verfahren das symmetrische Verbinden durch symmetrisches Verkleben und/oder durch symmetrisches thermisches Verschweißen, insbesondere durch symmetrisches thermisches Verschweißen.

Erfindungsgemäß werden beim symmetrischen Verbinden bei mindestens einem zu verbindenden Plattenpaar entweder zwei Oberseiten oder zwei Unterseiten der jeweiligen dünneren thermoplastischen Schaumstoffplatten miteinander verbunden.

Weiterhin ist es im erfindungsgemäßen Verfahren bevorzugt, dass beim symmetrischen Verbinden bei mindestens einem zu verbindenden Plattenpaar die Dichte der jeweiligen zu verbindenden Oberflächen der beiden dünneren thermoplastischen Schaumstoffplatten gleich ist oder sich maximal um 20 %, bevorzugt um maximal 10 %, mehr bevorzugt vom maximal 5 %, voneinander unterscheidet. Besonders bevorzugt weisen sämtliche zu verbindenden Oberflächen der jeweiligen (dünneren) Ausgangsplatten die gleiche Dichte auf.

Sofern im erfindungsgemäßen Verfahren das symmetrische Verbinden als symmetrisches Verkleben durchgeführt wird, erfolgt die Durchführung des Verklebevorganges als solches bzw. die Auswahl geeigneter Klebstoffe nach dem Fachmann bekannten Verfahren. Ein entsprechendes Klebeverfahren sowie geeignete Klebstoffe sind beispielsweise in der deutschen Patentanmeldung DE-A 10 2012 023 180.6 offenbart.

Sofern im erfindungsgemäßen Verfahren das symmetrische Verbinden durch symmetrisches thermisches Verschweißen durchgeführt wird, ist die Durchführung des thermischen Verschweißens als solchem dem Fachmann bekannt. Der Effekt des symmetrischen thermischen Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das thermische Verschweißen mit einer Vorrichtung ausgewählt aus einem Heizschwert, einem Heizgitter oder einer Heizplatte durchgeführt wird, wobei die Vorrichtung gegebenenfalls mit Noppen oder Rillen versehen sein kann. Beispielsweise kann das thermische Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum thermischen Verschweißen Noppen oder Rillen aufweist, können auf diese Weise auch strukturierte Vertiefungen auf die entsprechende Oberfläche der thermisch zu verschweißenden dünneren thermoplastischen Schaumstoffplatten aufgebracht werden. Anstelle der Verwendung einer Vorrichtung wie eines Heizschwerts oder eines Heizgitters ist es im Rahmen der vorliegenden Erfindung auch möglich, dass das thermische Verschweißen, also die Wärmezufuhr, unter Verwendung von elektromagnetischer Strahlung teilweise oder vollständig durchgeführt wird (siehe auch weiter unten im Text). Ebenso ist es denkbar, dass im Anschluss an das thermische Verschweißen mittels eines Heizschwerts oder eines Heizgitters ein zusätzlicher Verschweißschritt unter Verwendung von elektromagnetischer Strahlung nachgeschaltet ist.

Durch das symmetrische thermische Verschweißen bildet sich zwischen den zu verschweißenden Oberflächen eine Schweißnaht aus. Anstelle des Begriffs "Schweißnaht" können auch die Begriffe "Schweißhaut" oder "Schweißzone" verwendet werden. Beim thermischen Verschweißen wird im Rahmen der vorliegenden Erfindung an den Stellen, an denen die Oberfläche der dünneren thermoplastischen Schaumstoffplatte gegebenenfalls strukturierte Vertiefungen aufweist, vorzugsweise keine Schweißnaht ausgebildet. An den Stellen, wo sich eine Schweißnaht ausbildet, kann die Schweißnaht eine beliebige Dicke annehmen. Vorzugsweise beträgt die Schweißnaht zwischen 30 und 200 µm (Durchschnittswert verteilt über mindestens fünf Messpunkte, die durch Lichtmikroskopie bestimmt werden), mehr bevorzugt 50 bis 150 µm, noch mehr bevorzugt zwischen 70 und 150 µm, insbesondere zwischen 80 und 130 µm. Vorzugsweise erfolgt der Verschweißungsvorgang über einen Zeitraum von maximal 10 Sekunden (bezogen auf die jeweiligen Stellen einer Oberfläche, auf die Energie zugeführt wird).

Das symmetrische thermische Verschweißen wird erfindungsgemäß bei Temperaturen von 150°C bis 400 °C durchgeführt, wobei vorzugsweise auf Temperaturen oberhalb der Glasübergangstemperatur und/oder Schmelztemperatur der thermoplastischen Schaumstoffplatte erhitzt wird. Vorzugsweise wird das symmetrische thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt.

In einer Ausführungsform der vorliegenden Erfindung erfolgt das symmetrische thermische Verschweißen in Gegenwart von mindestens einem Absorber von elektromagnetischer Strahlung (im nachfolgenden Text auch als "Absorber" bezeichnet). Hierzu wird mindestens ein Absorber auf mindestens eine Oberfläche von mindestens einer dünneren thermoplastischen Schaumstoffplatte aufgetragen.

Vorzugsweise wird pro zu verschweißendem Plattenpaar auf nur eine symmetrisch thermisch zu verschweißende Oberfläche der dünneren thermoplastischen Schaumstoffplatten mindestens ein Absorber von elektromagnetischer Strahlung aufgetragen. Verfahren zum Auftragen des Absorbers von elektromagnetischer Strahlung sind dem Fachmann bekannt, beispielsweise kann der Absorber großflächig auf die entsprechende Oberfläche der dünneren thermoplastischen Schaumstoffplatte aufgetragen werden. Vorzugsweise wird der Absorber von elektromagnetischer Strahlung als Dispersion eingesetzt, insbesondere als wässrige Dispersion. Das Auftragen auf die Plattenoberfläche kann beispielsweise durch Pinseln, Rakeln, Walzen, Sprühen oder Drucken erfolgen.

Die Menge an Absorber (fest) auf einer Oberfläche beträgt normalerweise 0,01 g/m² bis 100 g/m², bevorzugt 0,1g/m² bis 50 g/m². Besonders bevorzugt 1 g/m² bis 20 g/m². Die Absorber können einseitig oder beidseitig aufgetragen werden.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere lonomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von ≤ 50 µm bei mindestens einer Wellenlänge von Strahlung des Wellenlängenbereichs von 700 nm bis 1000 µm eine Absorption ≥ 90 % zeigt. Bevorzugt ist der Wellenlängenbereich von > 1 µm bis 20 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Sofern im Rahmen der vorliegenden Erfindung auf mindestens eine Oberfläche von mindestens einer dünneren thermoplastischen Schaumstoffplatte mindestens ein Absorber von elektromagnetischer Strahlung aufgetragen wird, erfolgt vorzugsweise das symmetrische thermische Verschweißen teilweise oder vollständig unter Verwendung von elektromagnetischer Strahlung. Der Fachmann kennt die hierfür erforderlichen Geräte zur Erzeugung der geeigneten elektromagnetischen Strahlung. Beispielsweise kann eine beschichtete Platte im Sekunden- bis Minutenbereich in einem Mikrowellenofen oder mit einem IR-Strahler bestrahlt werden.

In einer bevorzugten Ausführungsform der vorliegenden Erfindung wird auf mindestens eine Oberfläche von mindestens einer dünneren thermoplastischen Schaumstoffplatte mindestens ein Absorber von elektromagnetischer Strahlung aufgetragen, wobei mindestens eine dünnere thermoplastische Schaumstoffplatte, auf die der Absorber von elektromagnetischer Strahlung aufgetragen wurde, mit elektromagnetischer Strahlung bestrahlt wird.

Wie vorstehend bereits erwähnt, können außer dem Absorber von elektromagnetischer Strahlung auch weitere Stoffe mit anderen Verwendungseigenschaften gemeinsam mit dem Absorber auf die zu verschweißende Oberfläche der entsprechenden dünneren thermoplastischen Schaumstoffplatten aufgetragen werden. Geeignete weitere Stoffe können beispielsweise Bindemittel, Flammschutzmittel, pH-Regulatoren sowie gegebenenfalls Lösungsmittel sein. Bindemittel, Flammschutzmittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen wird, das i) mindestens einen Absorber von elektromagnetischer Strahlung, ii) mindestens ein Bindemittel und/oder iii) mindestens ein Flammschutzmittel enthält.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethylen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethylen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

In einer Ausführungsform der vorliegenden Erfindung enthalten die erfindungsgemäßen thermoplastischen Schaumstoffplatten mindestens ein Flammschutzmittel. Flammschutzmittel als solche sind dem Fachmann bekannt. Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung. Die vorgenannten Flammschutzmittel, vorzugsweise die phosphorhaltigen Flammschutzmittel, aber nicht die halogenierten organischen Verbindungen, werden vorzugsweise vor dem thermischen Verschweißen direkt auf mindestens eine Oberfläche (pro Plattenpaar) der zu verschweißenden Ausgangsplatten aufgetragen.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlor-isopropyl)phosphat), TPP (Triphenylphosphat), TEHP (Tris-(2-ethylhexyl)phosphat), TKP (Trikresylphosphat) oder TCEP (Trichlorpropylphosphat).

Bevorzugte halogenierte organische Verbindungen sind bromhaltige organische Verbindungen, besonders bevorzugt sind HBCD (Hexabromcyclododekan) oder bromierte Polystyrole. Bromierte Polystyrole sind kommerziell erhältlich, beispielsweise von Emerald, Fa. Great Lakes. Sie werden vorzugsweise in Mengen von 0,5 bis 5 Gew.-% (bezogen auf die Ausgangsplatte) eingesetzt. Sofern halogenierte organische Verbindungen als Flammschutzmittel eingesetzt werden, erfolgt dies vorzugsweise bereits während des Herstellungsprozesses der Ausgangsplatten, das heißt, das Flammschutzmittel ist gleichmäßig über die gesamte Dicke der jeweiligen Ausgangsplatte verteilt.

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Wie vorstehend bereits ausgeführt, orientiert sich die Dimensionierung der im erfindungsgemäßen Verfahren hergestellten zumindest zweilagigen thermoplastischen Schaumstoffplatten als solche an der entsprechenden Dimensionierung der in diesem Verfahren eingesetzten Ausgangsplatten. Prinzipiell können die zumindest zweilagigen thermoplastischen Schaumstoffplatten beliebig dimensioniert sein. Vorzugsweise ist die zumindest zweilagige thermoplastische Schaumstoffplatte eine zumindest zweilagige thermoplastische Schaumstoffplatte, deren thermisch induzierter Verzug bezogen auf die Dicke der zumindest zweilagigen thermoplastischen Schaumstoffplatte ≤ 1,5 mm ist. Besonders bevorzugt handelt es sich dabei um eine zumindest zweilagige thermoplastische Extrusionsschaumstoffplatte, wobei vorzugsweise deren thermisch induzierter Verzug bezogen auf die Dicke der zumindest zweilagigen thermoplastischen Extrusionsschaumstoffplatte ≤ 1,5 mm ist.

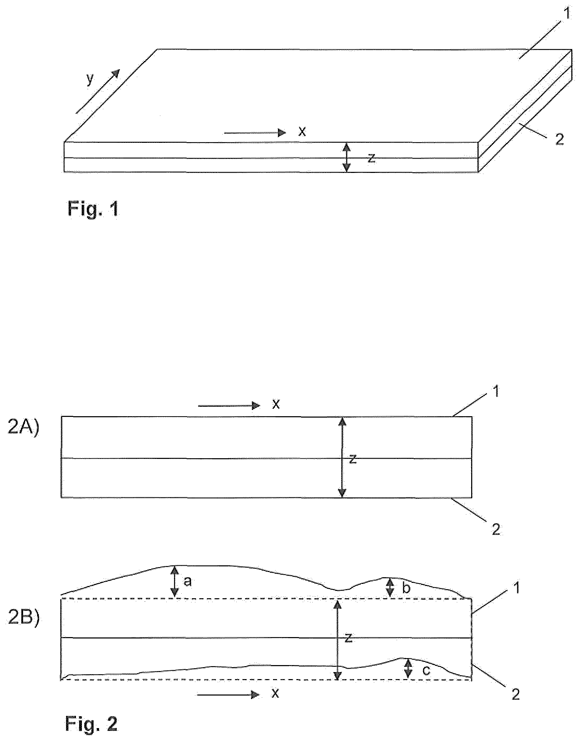

Erfindungsgemäß ist es bevorzugt, dass der thermisch induzierte Verzug bezogen auf die Dicke der thermoplastischen Schaumstoffplatten, vorzugsweise der thermoplastischen Extrusionsschaumstoffplatten, ≤ 1,5 mm ist. Die räumliche Anordnung von Länge, Breite und Dicke einer erfindungsgemäßen zumindest zweilagigen thermoplastischen Schaumstoffplatte ist in Figur 1 anhand einer zweilagigen thermoplastischen Extrusionsschaumstoffplatte verdeutlicht. Die Ziffern 1 und 2 stellen dabei je eine dünnere thermoplastische Ausgangsplatte dar, die erfindungsgemäß durch symmetrisches Verbinden, vorzugsweise durch symmetrisches thermisches Verschweißen, unter Ausbildung der zweilagigen thermoplastischen Schaumstoffplatte als solcher zur Deckung gebracht worden sind.

Erfindungsgemäß ist die Dicke als die z-Richtung definiert, die zusammen mit der x-Richtung und der γ-Richtung in einem rechtwinkligen Koordinatensystem die Dimensionierung der erfindungsgemäßen zumindest zweilagigen thermoplastischen Schaumstoffplatten festlegen. Unter der x-Richtung wird erfindungsgemäß die Länge der zumindest zweilagigen thermoplastischen Schaumstoffplatten und unter der γ-Richtung die Breite dieser Platten verstanden. Die Länge (x-Richtung) gibt die Extrusionsrichtung bei der kontinuierlichen Extrusion wieder. Erfindungsgemäß ist die Länge der zumindest zweilagigen thermoplastischen Schaumstoffplatten immer größer als die Breite und die Dicke. Vorzugsweise ist bei den erfindungsgemäßen zumindest zweilagigen thermoplastischen Schaumstoffplatten die Länge (x-Richtung) größer als die Breite (y-Richtung), und die Breite wiederum ist größer als die Dicke (z-Richtung).

Der thermisch induzierte Verzug (auch als Verformung oder Aufschüsseln bezeichnet) wird erfindungsgemäß auf die Dicke der zumindest zweilagigen thermoplastischen Schaumstoffplatten (z-Richtung) bezogen, die vorzugsweise die kleinste der drei Raumrichtungen ist. Erfindungsgemäß ist der thermisch induzierte Verzug ≤ 1,5 mm, bevorzugt < 1,0 mm, mehr bevorzugt < 0,5 mm, insbesondere tritt gar kein thermisch induzierter Verzug auf. Unter dem Begriff "kein thermisch induzierter Verzug" wird erfindungsgemäß eine Verformung in z-Richtung von 0 bis maximal 0,1 mm verstanden.

Besonders bevorzugt werden die vorgenannten Grenzwerte für den thermisch induzierten Verzug auch nach einer Wärmebehandlung im Bereich von 40 bis 70 °C für sieben bis zehn Tag aufrechterhalten.

Der thermisch induzierte Verzug wird in Figur 2 verdeutlicht, wobei in Figur 2A die Seitenansicht einer zumindest zweilagigen thermoplastischen Schaumstoffplatte vor einer Wärmeeinwirkung zu sehen ist. In Figur 2B ist dieselbe zumindest zweilagige thermoplastische Schaumstoffplatte dargestellt, nachdem diese einer Wärmequelle ausgesetzt gewesen ist. Aufgrund von Temperaturänderungen (Wärmebehandlung) ist eine Aufwölbung (Verformung in z-Richtung) festzustellen. Die (maximale) Ausdehnung bzw. der Verzug (Aufwölbung) in z-Richtung ist in Figur 2B durch die Strecke a dargestellt. Die gestrichelten Linien geben die Form der zumindest zweilagigen thermoplastischen Schaumstoffplatte vor der Wärmebehandlung wieder. Die Strecken b und c zeigen ebenfalls Stellen auf, an denen eine Aufwölbung stattgefunden hat, allerdings in etwas geringerem Maße im Vergleich zu der Stelle, die auf die Strecke a definiert ist.

Erfindungsgemäß wird der thermisch induzierte Verzug bestimmt, indem die entsprechende zumindest zweilagige thermoplastische Schaumstoffplatte für einen Zeitraum von 10 bis 20 Stunden bei maximal 70 °C gelagert wird. Vorzugsweise erfolgt die Messung maximal 72 Stunden nach der Herstellung und wird für 12 Stunden bei 60 °C durchgeführt. Die erfindungsgemäßen zumindest zweilagigen thermoplastischen Schaumstoffplatten weisen infolge der vorstehend beschriebenen Wärmebehandlung eine maximale Abweichung von 1,5 mm in z-Richtung (Dicke) auf, also die Strecke a in Figur 2B. Weiterhin ist es bevorzugt, dass die erfindungsgemäßen zumindest zweilagigen thermoplastischen Schaumstoffplatten für einen Zeitraum von mindestens einer Woche einen konstanten thermisch induzierten Verzug von ≤ 1,5 mm aufweisen. Die Messung der konkreten Werte des thermisch induzierten Verzuges kann auf einfache Weise unter Verwendung einer flach auf die entsprechende Oberfläche aufgelegten Messlatte erfolgen, gegebenenfalls können auch Abweichungen unter Zuhilfenahme eines Mikroskopes bestimmt werden.

Vorzugsweise weisen beim symmetrischen Verbinden bei mindestens einem zu verbindenden Plattenpaar die zwei dünneren thermoplastischen Schaumstoffplatten jeweils eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, auf. Weiterhin ist es bevorzugt, dass im Fall von drei- oder höherlagigen thermoplastischen Schaumstoffplatten jede darin enthaltene Ausgangsplatte (dünnere thermoplastische Schaumstoffplatte) die vorgenannten Dimensionen aufweist. Im Fall von dreilagigen thermoplastischen Schaumstoffplatten weisen die beiden äußeren Ausgangsplatten vorzugsweise (exakt) dieselbe Dicke auf, während die mittlere Ausgangsplatte gegebenenfalls hinsichtlich ihrer Dicke von den entsprechenden Dicken der beiden äußeren Ausgangsplatten abweichen kann.

In einer bevorzugten Ausführungsform der vorliegenden Erfindung ist die thermoplastische Schaumstoffplatte dreilagig und diejenigen beiden dünneren thermoplastischen Schaumstoffplatten, die in der dreilagigen thermoplastischen Schaumstoffplatte die beiden Außenplatten bilden, weisen die gleiche Dicke auf. Unter den Begriffen "Außenplatten der dreilagigen thermoplastischen Schaumstoffplatten" bzw. "äußere Ausgangsplatte" versteht man also diejenigen beiden (ursprünglichen) dünneren thermoplastischen Schaumstoffplatten (Ausgangsplatten), die jeweils eine der flächenmäßig größten Außenseiten der dreilagigen thermoplastischen Schaumstoffplatte ausbilden. Es handelt sich hierbei also um eine so genannte "Sandwichstruktur", bei der die beiden Außenplatten nicht direkt miteinander verbunden sind, sondern über eine dritte (mittlere) dünnere thermoplastische Schaumstoffplatte (Ausgangsplatte) in ihrer Mitte. Die beiden Außenplatten berühren sich also nicht direkt. Die Dicke (z-Richtung) der mittleren Ausgansplatte kann dabei beliebig sein, gegebenenfalls kann sie somit die gleiche Dicke aufweisen wie die beiden Außenplatten oder sie kann auch eine kleinere oder größere Dicke aufweisen. Vorzugsweise weist die mittlere Ausgangsplatte in dieser Ausführungsform eine um maximal 25 % kleinere Dicke als die beiden Außenplatten auf. Die Dimensionen (Länge, Breite und Dicke) der drei Ausgangsplatten entsprechen vorzugsweise den Dimensionsangaben im vorausgegangenen Absatz. Besonders bevorzugt haben die beiden äußeren Ausgangsplatten jeweils eine Dicke von 70 bis 90 mm, während die mittlere Ausgangsplatte eine Dicke von 50 bis 70 mm aufweist, wobei die Dicke der mittleren Ausgangsplatte immer kleiner ist als die Dicke der beiden Außenplatten. Ein besonders bevorzugtes Beispiel ist hierfür eine Dicke von jeweils 80 mm der beiden Außenplatten und eine Dicke vom 60 mm für die mittlere Ausgangsplatte. Weiterhin ist es bevorzugt, dass sämtliche Ausgangsplatten in dieser Ausführungsform durch symmetrisches thermisches Verschweißen miteinander verbunden werden.

Weiterhin ist es erfindungsgemäß bevorzugt, dass der thermisch induzierte Verzug von ≤ 1,5 mm für einen Zeitraum von mindestens einer Woche konstant bleibt.

Weiterhin ist es erfindungsgemäß bevorzugt, dass beim symmetrischen Verbinden vorzugsweise beim symmetrischen thermischen Verschweißen, bei mindestens einem zu verbindenden Plattenpaar mindestens eine, vorzugsweise beide zu verbindenden Oberflächen der dünneren thermoplastischen Schaumstoffplatten schäumhautfrei sind.

Weiterhin ist es im erfindungsgemäßen Verfahren bevorzugt, dass die dünnere thermoplastische Schaumstoffplatte ein Extrusionsschaumstoff ist und das zur Extrusion verwendete Polymer zusätzlich mindestens eine Komponente ausgewählt aus einem mineralischen Füllstoff, einem Keimbildner, einem Flammschutzmittel oder einem IR-Absorber enthält, vorzugsweise enthält das zur Extrusion verwendete Polymer als IR-Absorber Graphit.

Weiterhin ist es bevorzugt, dass in erfindungsgemäßen Verfahren ein Verpressen der symmetrisch zu verbindenden zusammengefügten dünnen thermoplastischen Schaumstoffplatten durchgeführt wird. Das Verpressen erfolgt im Allgemeinen im Sekunden- bis Minutenbereich und/oder bei einem Pressdruck von 0,1 bis 0,5 bar. Das Verpressen erfolgt erfindungsgemäß vorzugsweise nach dem symmetrischen Verbinden, insbesondere nach dem symmetrischen thermischen Verschweißen. Sofern im Rahmen der vorliegenden Erfindung das symmetrische thermische Verschweißen nur mittels Bestrahlung mit elektromagnetischer Strahlung durchgeführt wird, kann das Verpressen auch vor dem symmetrischen thermischen Verschweißen durchgeführt werden.

Gegebenenfalls kann im erfindungsgemäßen Verfahren ein Trocknungsschritt durchgeführt werden, beispielsweise nachdem ein Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100°C statt.

Ein weiterer Gegenstand der vorliegenden Erfindung sind die thermoplastischen Schaumstoffplatten als solche, die zumindest zweilagig sind und nach dem vorstehend beschriebenen Verfahren herstellbar sind.

Nachfolgend wird die Erfindung anhand von Beispielen verdeutlicht.

Die thermoplastischen Schaumstoffplatten ("Platten") werden in einem kontinuierlichen Extrusionsverfahren hergestellt, wie es in "Polystyrol, Kunststoffhandbuch 4" [H. Gausepohl u. R. Geliert, Hanser-Verlag München (1996] unter Kapitel 13.2.3 (S. 591-598), insbesondere in Bild 13.24, oben, beschreiben ist. Jeweils zwei Ausgangsplatten (Styrodur 3035 CS, Dichte 35 g/l, Dicke 50 mm, Größe (Länge x Breite) 120 x 60 cm²) werden 30 Minuten nach ihrer Herstellung (durch kontinuierliche Extrusion) miteinander verbunden, wobei in den Ausführungsbeispielen 2 und 3 das symmetrische Verbinden der beiden Ausgangsplatten durch symmetrisches thermisches Verschweißen erfolgt, während in Vergleichsbeispiel 1 kein symmetrisches Verbinden der beiden Ausgangsplatten durchgeführt wird.

Beim thermischen Verschweißen (sowohl in der symmetrischen wie auch in der konventionellen Variante) werden folgende Versuchsparameter eingestellt: Die Verschweißungstemperatur beträgt 180 °C, die Verschweißungszeit 5 Sekunden, der Anpressdruck liegt bei 0,01 N/mm². Die Versuche werden mit einer handelsüblichen Spiegelschweißanlage der Firma Wegener GmbH, Typ SMS 203, durchgeführt.

Nach Durchführung des thermischen Verschweißens werden die so hergestellten zweilagigen thermoplastischen Schaumstoffplatten 48 Std. bei Raumtemperatur und dann für 12 Std. bei 60 °C in einem Trockenschrank gelagert. Die Verformung (thermisch induzierter Verzug) wird unmittelbar nach der Wärmelagerung und nach einwöchiger Lagerung gemessen. Die Verformung wird als maximale Abweichung gegenüber einer flach aufgelegten Messlatte bestimmt.

**Tabelle 1:**

| Beispiel | Maßnahme | Max. Verformung nach Wärmelagerung 12 Std. (mm) | Max. Verformung nach 7 Tagen (mm) |
|---|---|---|---|
| 1 (Vgl.) | Platten wurden Unterseite auf Oberseite 30 Minuten nach Herstellung verschweißt | 2 | 4 |
| 2 | Platten wurden Unterseite auf Unterseite 30 Minuten nach Herstellung verschweißt | 1 | 1 |
| 3 | Platten wurden Oberseite auf Oberseite 30 Minuten nach Herstellung verschweißt | 1 | 1 |

| | | | |
|---|---|---|---|
| Vgl.: Vergleichsbeispiel | | | |

Die vorstehenden Versuche gemäß Tabelle 1 zeigen, dass die erfindungsgemäßen thermoplastischen Schaumstoffplatten mit einem reduzierten thermisch induzierten Verzug durch symmetrisches Verbinden (konkret: symmetrisches thermisches Verschweißen) hergestellt werden können. Während in den beiden Ausführungsbeispielen 2 und 3 die jeweiligen Ausgangsplatten entweder durch Unterseite auf Unterseite (Ausführungsbeispiel 2) oder durch Oberseite auf Oberseite (Ausführungsbeispiel 3) symmetrisch miteinander verbunden worden sind, erfolgte im Vergleichsbeispiel 1 ein asymmetrisches Verbinden der beiden Ausgangsplatten, wobei die Unterseite der ersten Ausgangsplatte mit der Oberseite der zweiten Ausgangsplatte (konventionell) thermisch miteinander verschweißt wurde.

Als erfindungsgemäß gelten diejenigen zweilagigen thermoplastischen Schaumstoffplatten, die eine maximale Verformungen ≤ 1,5 mm (thermisch induzierter Verzug) nach einer - im Anschluss an die Plattenherstellung durchgeführten - Wärmelagerung aufweisen. Darüber hinaus kommt es auch in Folge der Wärmelagerung zu keiner thermischen Schädigung der Plattenoberfläche (Extrusionshaut), sondern die Plattenoberfläche ist sowohl vor als auch nach der Wärmelagerung gleichbleibend glatt. Bei den erfindungsgemäßen thermoplastischen Extrusionsschaumstoffplatten wird zudem auch nach einer mindestens 1-wöchigen Lagerung keine Überschreitung des vorgenannten Verformungsgrenzwertes von 1,5 mm beobachtet.

## Patentansprüche

1. Verfahren zur Herstellung einer zumindest zweilagigen thermoplastischen Schaumstoffplatte durch symmetrisches Verbinden von mindestens zwei dünneren thermoplastischen Schaumstoffplatten zu der zumindest zweilagigen thermoplastischen Schaumstoffplatte, wobei das symmetrische Verbinden durch symmetrisches Verkleben und/oder durch symmetrisches thermisches Verschweißen erfolgt, wobei beim symmetrischen Verbinden bei mindestens einem zu verbindenden Plattenpaar entweder zwei Oberseiten oder zwei Unterseiten der jeweiligen dünneren thermoplastischen Schaumstoffplatten miteinander verbunden werden.

2. Verfahren gemäß Anspruch 1, **dadurch gekennzeichnet, dass** die zumindest zweilagige thermoplastische Schaumstoffplatte eine zweilagige oder dreilagige, vorzugsweise eine zweilagige thermoplastische Schaumstoffplatte ist.

3. Verfahren gemäß Anspruch 1 oder 2, **dadurch gekennzeichnet, dass** die zumindest zweilagige thermoplastische Schaumstoffplatte eine Extrusionsschaumstoffplatte ist, insbesondere eine zumindest zweilagige thermoplastische Extrusionsschaumstoffplatte, deren thermisch induzierter Verzug bezogen auf die Dicke der zumindest zweilagigen thermoplastischen Extrusionsschaumstoffplatte ≤ 1,5 mm ist.

4. Verfahren gemäß einem der Ansprüche 1 bis 3, **dadurch gekennzeichnet, dass** das symmetrische Verbinden durch symmetrisches thermisches Verschweißen erfolgt.

5. Verfahren gemäß einem der Ansprüche 1 bis 4, **dadurch gekennzeichnet, dass** beim symmetrischen Verbinden bei mindestens einem zu verbindenden Plattenpaar die Dichte der jeweiligen zu verbindenden Oberflächen der beiden dünneren thermoplastischen Schaumstoffplatten gleich ist oder sich maximal um 20 % voneinander unterscheidet.

6. Verfahren gemäß einem der Ansprüche 1 bis 5, **dadurch gekennzeichnet, dass** das symmetrische Verbinden durch symmetrisches thermisches Verschweißen erfolgt und die durch das symmetrische thermische Verschweißen gebildete Schweißnaht eine Dicke von 30 bis 200 µm aufweist, vorzugsweise von 50 bis 150 µm, mehr bevorzugt von 70 bis 130 µm, insbesondere von 80 bis 100 µm.

7. Verfahren gemäß einem der Ansprüche 1 bis 6, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff aus Polystyrol oder aus einem aus Styrol hergestellten Copolymer.

8. Verfahren gemäß einem der Ansprüche 1 bis 7, **dadurch gekennzeichnet, dass** die thermoplastische Schaumstoffplatte mindestens ein Flammschutzmittel enthält, das vorzugsweise ausgewählt ist aus einem Phosphat, einem Phosphit, einem Phosphonat, einem Polyphosphonat, Melamin, einem Aluminiumoxidhydrat oder einer halogenierten organischen Verbindung.

9. Verfahren gemäß einem der Ansprüche 1 bis 8, **dadurch gekennzeichnet, dass** beim symmetrischen Verbinden, vorzugsweise beim symmetrischen thermischen Verschweißen, bei mindestens einem zu verbindenden Plattenpaar mindestens eine, vorzugsweise beide zu verbindenden Oberflächen der dünneren thermoplastischen Schaumstoffplatten schäumhautfrei sind.

10. Verfahren gemäß einem der Ansprüche 1 bis 9, **dadurch gekennzeichnet, dass** das symmetrische Verbinden durch symmetrisches thermisches Verschweißen erfolgt und das symmetrische thermische Verschweißen bei Temperaturen von 50 bis 300 °C oberhalb der Glasübergangstemperatur bei amorphen thermoplastischen Schaumstoffen oder von 50 bis 100 °C oberhalb der Schmelztemperatur bei teilkristallinen thermoplastischen Schaumstoffen durchgeführt wird.

11. Verfahren gemäß einem der Ansprüche 1 bis 10, **dadurch gekennzeichnet, dass** beim symmetrischen Verbinden bei mindestens einem zu verbindenden Plattenpaar die zwei dünneren thermoplastischen Schaumstoffplatten jeweils eine Länge (x-Richtung) von 500 bis 2800 mm, vorzugsweise von 1000 bis 1500 mm, eine Breite (y-Richtung) von 500 bis 1250 mm, vorzugsweise von 500 bis 900 mm, und eine Dicke (z-Richtung) von 20 bis 200 mm, vorzugsweise von 50 bis 100 mm, aufweisen.

12. Verfahren gemäß einem der Ansprüche 1 bis 11, **dadurch gekennzeichnet, dass** der thermisch induzierte Verzug von ≤ 1,5 mm für einen Zeitraum von mindestens einer Woche konstant bleibt.

13. Verfahren gemäß einem der Ansprüche 1 bis 12, **dadurch gekennzeichnet, dass** die dünnere thermoplastische Schaumstoffplatte ein Extrusionsschaumstoff ist und das zur Extrusion verwendete Polymer zusätzlich mindestens eine Komponente ausgewählt aus einem mineralischen Füllstoff, einem Keimbildner, einem Flammschutzmittel oder einem IR-Absorber enthält, vorzugsweise enthält das zur Extrusion verwendete Polymer als IR-Absorber Graphit.

14. Verfahren gemäß einem der Ansprüche 1 bis 13, **dadurch gekennzeichnet, dass** die thermoplastische Schaumstoffplatte dreilagig ist und diejenigen beiden dünneren thermoplastischen Schaumstoffplatten, die in der dreilagigen thermoplastischen Schaumstoffplatte die beiden Außenplatten bilden, die gleiche Dicke aufweisen.

15. Thermoplastische Schaumstoffplatte, die zumindest zweilagig ist, herstellbar nach einem Verfahren gemäß einem der Ansprüche 1 bis 14.

## Claims

1. A process for the production of an at least two-layer thermoplastic foam sheet via symmetrical bonding of at least two thinner thermoplastic foam sheets to give the at least two-layer thermoplastic foam sheet, where the symmetrical bonding takes place via symmetrical adhesive bonding and/or via symmetrical thermal welding, where the symmetrical bonding for at least one pair of sheets to be bonded comprises bonding either two upper sides or two lower sides of the respective thinner thermoplastic foam sheets to one another.

2. The process according to claim 1, wherein the at least two-layer thermoplastic foam sheet is a two-layer or three-layer, preferably a two-layer, thermoplastic foam sheet.

3. The process according to claim 1 or 2, wherein the at least two-layer thermoplastic foam sheet is an extruded foam sheet, in particular an at least two-layer extruded thermoplastic foam sheet, the thermally induced warpage of which is ≤ 1.5 mm, based on the thickness of the at least two-layer extruded thermoplastic foam sheet.

4. The process according to any of claims 1 to 3, wherein the symmetrical bonding takes place via symmetrical thermal welding.

5. The process according to any of claims 1 to 4, wherein, in the symmetrical bonding where at least one pair of sheets is to be bonded, the density of the respective surfaces to be bonded of the two thinner thermoplastic foam sheets is identical or differs by at most 20%.

6. The process according to any of claims 1 to 5, wherein the symmetrical bonding takes place via symmetrical thermal welding, and the thickness of the weld formed via the symmetrical thermal welding is from 30 to 200 µm, preferably from 50 to 150 µm, more preferably from 70 to 130 µm, in particular from 80 to 100 µm.

7. The process according to any of claims 1 to 6, wherein the thinner thermoplastic foam sheet is a molded foam or an extruded foam, preferably an extruded foam made of polystyrene or made of a copolymer produced from styrene.

8. The process according to any of claims 1 to 7, wherein the thermoplastic foam sheet comprises at least one flame retardant preferably selected from a phosphate, a phosphite, a phosphonate, a polyphosphonate, melamine, an aluminum oxide hydrate, or a halogenated organic compound.

9. The process according to any of claims 1 to 8, wherein, in the symmetrical bonding, preferably in the symmetrical thermal welding, in the case of at least one pair of sheets to be bonded, at least one, preferably both, surfaces to be bonded of the thinner thermoplastic foam sheets are foaming-skin-free.

10. The process according to any of claims 1 to 9, wherein the symmetrical bonding takes place via symmetrical thermal welding, and the symmetrical thermal welding is carried out at temperatures of from 50 to 300°C above the glass transition temperature in the case of amorphous thermoplastic foams or of from 50 to 100°C above the melting point in the case of semicrystalline thermoplastic foams.

11. The process according to any of claims 1 to 10, wherein, in the symmetrical bonding, in the case of at least one pair of sheets to be bonded, the length (x-direction) of the two thinner thermoplastic foam sheets is respectively from 500 to 2800 mm, preferably from 1000 to 1500 mm, their width (y-direction) is from 500 to 1250 mm, preferably from 500 to 900 mm, and their thickness (z-direction) is from 20 to 200 mm, preferably from 50 to 100 mm.

12. The process according to any of claims 1 to 11, wherein the thermally induced warpage of ≤ 1.5 mm remains constant for a period of at least one week.

13. The process according to any of claims 1 to 12, wherein the thinner thermoplastic foam sheet is an extruded foam and the polymer used for the extrusion process additionally comprises at least one component selected from a mineral filler, a nucleating agent, a flame retardant, or an IR absorber, and the polymer used for the extrusion process preferably comprises graphite as IR absorber.

14. The process according to any of claims 1 to 13, wherein the thermoplastic foam sheet has three layers, and the thickness of the two thinner thermoplastic foam sheets which form the two external sheets in the three-layer thermoplastic foam sheet is identical.

15. A thermoplastic foam sheet which has at least two layers, and can be produced by a process according to any of claims 1 to 14.

## Revendications

1. Procédé de fabrication d'une plaque de mousse thermoplastique au moins bicouche par liaison symétrique d'au moins deux plaques de mousse thermoplastiques plus minces pour former la plaque de mousse thermoplastique au moins bicouche, la liaison symétrique ayant lieu par collage symétrique et/ou par soudage thermique symétrique, deux côtés supérieurs ou deux côtés inférieurs des plaques de mousse thermoplastiques plus minces respectives étant reliés l'un avec l'autre pour au moins une paire de plaques à relier lors de la liaison symétrique.

2. Procédé selon la revendication 1, **caractérisé en ce que** la plaque de mousse thermoplastique au moins bicouche est une plaque de mousse thermoplastique bicouche ou tricouche, de préférence bicouche.

3. Procédé selon la revendication 1 ou 2, **caractérisé en ce que** la plaque de mousse thermoplastique au moins bicouche est une plaque de mousse extrudée, notamment une plaque de mousse extrudée thermoplastique au moins bicouche dont la déformation induite thermiquement au regard de l'épaisseur de la plaque de mousse extrudée thermoplastique au moins bicouche est ≤ 1,5 mm.

4. Procédé selon l'une quelconque des revendications 1 à 3, **caractérisé en ce que** la liaison symétrique a lieu par soudage thermique symétrique.

5. Procédé selon l'une quelconque des revendications 1 à 4, **caractérisé en ce que**, lors de la liaison symétrique, pour au moins une paire de plaques à relier, les densités des surfaces respectives à relier des deux plaques de mousse thermoplastiques plus minces sont identiques ou diffèrent l'une de l'autre d'au plus 20 %.

6. Procédé selon l'une quelconque des revendications 1 à 5, **caractérisé en ce que** la liaison symétrique a lieu par soudage thermique symétrique et le joint de soudure formé par le soudage thermique symétrique présente une épaisseur de 30 à 200 µm, de préférence de 50 à 150 µm, de manière davantage préférée de 70 à 130 µm, notamment de 80 à 100 µm.

7. Procédé selon l'une quelconque des revendications 1 à 6, **caractérisé en ce que** la plaque de mousse thermoplastique plus mince est une mousse particulaire ou une mousse extrudée, de préférence une mousse extrudée en polystyrène ou en un copolymère fabriqué à partir de styrène.

8. Procédé selon l'une quelconque des revendications 1 à 7, **caractérisé en ce que** la plaque de mousse thermoplastique contient au moins un agent ignifuge, qui est de préférence choisi parmi un phosphate, un phosphite, un phosphonate, un polyphosphonate, la mélamine, un oxyhydrate d'aluminium ou un composé organique halogéné.

9. Procédé selon l'une quelconque des revendications 1 à 8, **caractérisé en ce que**, lors de la liaison symétrique, de préférence lors du soudage thermique symétrique, pour au moins une paire de plaques à relier, au moins une, de préférence les deux surfaces à relier des plaques de mousse thermoplastiques plus minces sont exemptes de peau de mousse.

10. Procédé selon l'une quelconque des revendications 1 à 9, **caractérisé en ce que** la liaison symétrique a lieu par soudage thermique symétrique et le soudage thermique symétrique est réalisé à des températures de 50 à 300 °C au-dessus de la température de transition vitreuse en cas de mousses thermoplastiques amorphes ou de 50 à 100 °C au-dessus de la température de fusion en cas de mousses thermoplastiques partiellement cristallines.

11. Procédé selon l'une quelconque des revendications 1 à 10, **caractérisé en ce que**, lors de la liaison symétrique, pour au moins une paire de plaques à relier, les deux plaques de mousse thermoplastiques plus minces présentent chacune une longueur (direction x) de 500 à 2 800 mm, de préférence de 1 000 à 1 500 mm, une largeur (direction y) de 500 à 1 250 mm, de préférence de 500 à 900 mm, et une épaisseur (direction z) de 20 à 200 mm, de préférence de 50 à 100 mm.

12. Procédé selon l'une quelconque des revendications 1 à 11, **caractérisé en ce que** la déformation induite thermiquement de ≤ 1,5 mm reste constante pendant une durée d'au moins une semaine.

13. Procédé selon l'une quelconque des revendications 1 à 12, **caractérisé en ce que** la plaque de mousse thermoplastique plus mince est une mousse extrudée et le polymère utilisé pour l'extrusion contient en outre au moins un composant choisi parmi une charge minérale, un agent de nucléation, un agent ignifuge ou un absorbeur IR, le polymère utilisé pour l'extrusion contenant de préférence du graphite en tant qu'absorbeur IR.

14. Procédé selon l'une quelconque des revendications 1 à 13, **caractérisé en ce que** la plaque de mousse thermoplastique est tricouche et les deux plaques de mousse thermoplastiques plus minces qui forment les deux plaques extérieures dans la plaque de mousse thermoplastique tricouche présentent la même épaisseur.

15. Plaque de mousse thermoplastique qui est au moins bicouche, pouvant être fabriquée par un procédé selon l'une quelconque des revendications 1 à 14.
